# EUROPÄISCHE PATENTSCHRIFT

(11) **EP 1 673 205 B1**
(45) Veröffentlichungstag und Bekanntmachung des Hinweises auf die Patenterteilung: **27.01.2010**
(21) Anmeldenummer: 04765880.2
(22) Anmeldetag: 08.10.2004
(51) Int. Cl.: B29B 17/02, C08J 11/04, G01N 1/02, G01N 33/44

(54) **KUNSTSTOFFWIEDERAUFBEREITUNG MIT STEUERBARER DEKONTAMINATION**
PLASTIC RECYCLING WITH CONTROLLABLE DECONTAMINATION
RETRAITEMENT DE PLASTIQUE AVEC DECONTAMINATION POUVANT ETRE COMMANDEE

(30) Priorität: 13.10.2003 DE 10348145
(43) Veröffentlichungstag der Anmeldung: 28.06.2006
(73) Patentinhaber: Krones AG, 93073 Neutraubling (DE)
(72) Erfinder: FRIEDLAENDER, Thomas, 93049 Regensburg (DE); STRAUBINGER, Hans-Jürgen, 93080 Pentling (DE); HOFFERBERT, Maren, 93049 Regensburg (DE)
(86) Internationale Anmeldenummer: PCT/EP2004/011230
(87) Internationale Veröffentlichungsnummer: WO 2005/037513

(56) Entgegenhaltungen:
- WO-A-01/83112
- US-A- 4 591 629
- US-A- 5 049 647
- US-A- 5 688 693
- US-A- 5 899 392
- US-A- 6 103 774

## Beschreibung

Die Erfindung betrifft ein Verfahren und eine Vorrichtung zum Wiederaufbereiten von gebrauchten Kunststoffbehältern, insbesondere PET-Flaschen.

Verfahren und Vorrichtungen zum Wiederaufbereiten von gebrauchten Kunststoffbehältern sind bekannt. Dabei werden üblicherweise als erstes die Etiketten abgelöst und entfernt. Danach wird in einem weiteren Schritt eine Mühle benutzt, um die Behälter zu Flakes zu zerkleinern. Das entstandene Gemisch wird gewaschen und von vorhandenen Leimrückständen gesäubert. Danach findet eine Trennung nach verschiedenen Kunststoffarten beispielsweise PET und Polyethylen, statt. Danach werden die Flakes in einem Dekontaminationsschritt so gereinigt, dass sie wieder zur Herstellung neuer Kunststoffbehälter benutzt werden können.

So ist beispielsweise aus der DE-10002682 ein Dekontaminationsverfahren bekannt, in dem PET-Flakes aus zerkleinerten Getränkeflaschen einer Waschbehandlung in einem Wäscher unterworfen werden. Ferner ist aus der US-5688693 ein Verfahren bekannt, bei dem stark kontaminierte Flaschen oder Flakes identifiziert und aus dem Wiederaufbereitungsprozess entfernt werden.

Den bekannten Verfahren liegt jedoch das Problem zugrunde, dass der Dekontaminationsprozessschritt des Wiederaufbereitungsverfahrens auf "worst case" Bedingungen eingestellt wird. Dies bedeutet, dass der Reinigungsprozess, unabhängig vom Grad der Verschmutzung des Ausgangsmaterials, immer so durchgeführt wird, dass auch die am stärksten verunreinigten Kunststoffflaschen bzw. Kunststoffflakes ausreichend gereinigt werden. Daher arbeiten diese bekannten Verfahren, selbst wenn eine ausreichende Reinigung erzielt wird, unwirtschaftlich.

Es ist somit Aufgabe der vorliegenden Erfindung ein Verfahren und eine Vorrichtung bereitzustellen, das die Wirtschaftlichkeit der Wiederaufbereitung von gebrauchten Kunststoffbehältern, insbesondere von PET-Flaschen erhöht und den benötigten Dekontaminationsprozessschritt unter verbesserten Bedingungen durchzuführen erlaubt.

Diese Aufgabe wird mit dem Verfahren nach Anspruch 1 und der Vorrichtung zum Durchführen des Verfahrens nach Anspruch 17 gelöst.

Erfindungsgemäß umfasst das Verfahren demgemäß die Schritte: a) Analysieren des Kontaminationsgrads des Kunststoffs, b) Ermitteln von Dekontaminationsprozessparametern in Abhängigkeit von dem im Schritt a) festgestellten Kontaminationsgrad, und c) gesteuertes Dekontaminieren des Kunststoffs gemäß den ermittelten Dekontaminationsprozessparametern.

Mit diesem Verfahren wird der Dekontaminationsschritt, dank der Erfassung des Kontaminationsgrads, automatisch der tatsächlichen Verunreinigung des Kunststoffs angepasst. Durch gesteuertes Dekontaminieren wird somit übermäßiges Reinigen verhindert und man erhält ein Wiederaufbereitungsverfahren, das wirtschaftlicher zu betreiben ist.

In einer bevorzugten Ausführungsform können im Schritt a) im Kunststoff vorhandene verunreinigungsstoffe und deren jeweilige Konzentration festgestellt werden. Mit einem in dieser Weise aufgeschlüsselten Kontaminationsprofil lässt sich feststellen, wie der Kunststoff verunreinigt ist und wie stark die jeweilige Verschmutzung ist. Unter Verunreinigungsstoffen versteht man beispielsweise sowohl gesundheitsschädliche Stoffe als auch Aromen, die aufgrund ihrer geringen Wahrnehmungsschwelle sich schon in geringen Mengen schädlich auf die spätere Verwendung der recycelten Kunststoffbehältern auswirken können.

Vorteilhafterweise können die erfassten Verunreinigungsstoffe zu Verunreinigungsgruppen zusammengefasst werden. Die erfassen verunreinigungsstoffe und Konzentrationen werden im Schritt b) bei der Ermittlung benutzt, um die Dekontaminationsprozessparameter zu ermitteln. Eine Ermittlung in Abhängigkeit von allen erfassten verunreinigungen' kann dabei sehr zeitaufwendig sein und führt zu komplizierten Steueralgorithmen. Es ist daher vorteilhaft, Einzelkomponenten mit ähnlichen Eigenschaften zusammenzufassen. Denkbar wäre hierbei beispielsweise Kohlenwasserstoffe oder mehrere Kohlenwasserstoffteilgruppen mit vorbestimmten Molekulargewichtsbereichen zusammenzufassen. Denkbar wäre auch, die Verunreinigungsstoffe nach physikalischen Eigenschaften zu gruppieren, beispielsweise nach ihrer Diffusionskonstante.

In einer bevorzugten Ausführungsform kann im Schritt b) eine dem Kontaminationsgrad angepasste Prozesstemperatur, als ein Dekontaminationsprozessparameter, ermittelt werden. Da sich üblicherweise die verunreinigungen nicht nur an der Oberfläche des Kunststoffmaterials, sondern auch im Inneren des Materials befinden, müssen diese erst an die Oberfläche diffundieren, von wo sie dann beispielsweise durch Waschen entfernt werden können. Da nach den Diffusionsgesetzen die Diffusionskoeffizienten temperaturabhängig sind, lässt sich somit durch Anpassen der Temperatur an das vorhandene Kontaminationsniveau die Dekontamination beschleunigen. So wählt man beispielsweise für stark verunreinigte Kunststoffe eine höhere Prozesstemperatur als für weniger stark verschmutzte Kunststoffe.

In einer besonders vorteilhaften Ausführungsform des Verfahrens kann im Schritt b) eine dem Kontaminationsgrad angepasste Prozessdauer, als ein Dekontaminationsprozessparameter, ermittelt werden. Da nach dem Diffusionsgesetz die Stoffstromdichte nicht nur eine Funktion der Temperatur sondern auch der Zeit ist, lässt sich der Dekontaminationsschritt somit auch durch ein Anpassen der Verweilzeit optimieren. Man kann beispielsweise bei gleichbleibender Prozesstemperatur weniger stark verschmutzten Kunststoff schneller dekontaminieren als stark verschmutzten Kunststoff, der länger im Dekontaminationsprozess verweilen sollte. So kann man für beide Kontaminationsgrade am Ende des Dekontaminationsprozesses ein den Lebensmittelstandards ausreichendes Dekontaminationsniveau erreichen.

Denkbar kann im Schritt b) der Kontaminationsgrad des Kunststoffs durch Summierung der Konzentrationen der erfassten verunreinigungsstoffe oder Verunreinigungsgruppen ermittelt werden. Durch ein solches Abschätzen der Gesamtverunreinigung lassen sich die Dekontaminationsprozessparameter einfach und somit schnell ermitteln, wobei weiterhin die Dekontamination in Abhängigkeit eines ermittelten Kontaminationsgrades durchgeführt wird.

Zweckmäßigerweise kann dabei den einzelnen Verunreinigungsstoffen oder Verunreinigungsgruppen ein Gewichtungsfaktor in Abhängigkeit von einer dem Verunreinigungsstoff oder der Verunreinigungsgruppe entsprechenden Verunreinigungsstärke zugeordnet werden, und sich anschließend der Kontaminationsgrad aus der gewichteten Summierung der Kontaminationen der erfassten Verunreinigungsstoffe oder Verunreinigungsgruppen ergeben. Durch eine solche gewichtete Summierung lässt sich berücksichtigen, dass unterschiedliche Verunreinigungsstoffe unterschiedlich stark kontaminieren. So ist beispielsweise für Aromen die Wahrnehmungsschwelle speziell für Limonen relativ gering. Durch einen hohen Gewichtungsfaktor für Limonen kann beim Ermitteln der Dekontaminationsprozessparameter, selbst bei einer relativ geringen Konzentration im Vergleich zu anderen Stoffen, dieser Stoff berücksichtigt werden.

In einer weiteren Ausführungsform können im Schritt b) die Dekontaminationsparameter in Abhängigkeit von den Konzentrationen einer vorbestimmten Anzahl von verunreinigungsstoffen oder Verunreinigungsgruppen ermittelt werden. So könnte man beispielsweise die optimierten Dekontaminationsprozessparameter nur anhand der zehn am häufigsten vorkommenden Verunreinigungsstoffen ermitteln oder nur anhand der Summe der Kohlenwasserstoffe. Soll etwa der wiederaufbereitete Kunststoff nicht in der Lebensmittelindustrie wieder benutzt werden, so spielt eine Verunreinigung durch Aromen nur eine untergeordnete Rolle und bräuchte demnach bei der Ermittlung der Dekontaminationsparameter nicht berücksichtigt werden. Somit lässt sich das Verfahren nochmals besser an die Anforderungen an das wiederaufzubereitende Material anpassen.

In einer Variante der Erfindung können im Schritt b) für zumindest zwei, insbesondere alle erfassten Verunreinigungsstoffe oder Verunreinigungsgruppen jeweils die Dekontaminationsprozessparameter unabhängig voneinander ermittelt werden und im Schritt c) die Dekontaminationsprozessparameter angewendet werden, für die das Anforderungsprofil am höchsten ist. Unter der Annahme, dass die Dekontamination für die einzelnen Verunreinigungsstoffe unabhängig voneinander stattfindet, lässt sich somit auf einfache Weise gewährleisten, dass für ein gegebenes verunreinigungsprofil die Dekontaminationsprozessparameter ausgewählt werden, für die eine ausreichende Dekontamination bezüglich aller erfassten verunreinigungsstoffe gewährleistet werden kann.

In einer besonders vorteilhaften Ausführungsform können im Schritt b) die Dekontaminationsparameter abhängig von regelbaren Schwellenwerten ermittelt werden. So lässt sich je nach gewünschter Art der Wiederverwertung der Dekontaminationsprozess so einstellen, dass die Einhaltung der für die Art der Wiederverwertung benötigten Reinheit ausreichend gewährleistet werden kann.

Vorzugsweise kann der Schritt c) nur dann durchgeführt werde, wenn der Kontaminationsgrad einen vorbestimmten ersten Schwellenwert übersteigt. Ergibt sich aus der Analyse, dass der Kontaminationsgrad des Kunststoffs so gering ist, dass man den Wiederaufbereitungsprozess ohne Dekontamination fortführen könnte, ist es dank eines solchen vorbestimmten Schwellenwerts möglich, eben diesen speziellen Kontaminationsschritt zu überspringen, wodurch das Verfahren nochmals beschleunigt wird und somit noch wirtschaftlicher wird.

Vorzugsweise kann zwischen den Verfahrensschritten b) und c) der Kunststoff nachzerkleinert werden, wenn sich ergibt, dass der Kontaminationsgrad einen vorbestimmten zweiten Schwellenwert übersteigt. Durch ein Nachverkleinern verringert man die Länge des Diffusionswegs und somit auch die zeit, die benötigt wird um die Verunreinigungsstoffe an die Oberfläche des Kunststoffs zu bringen. Dadurch lässt sich bei starker Verschmutzung, bei der ansonsten nur eine übermäßig lange Dekontamination ausreichenden Erfolg bringen würde, der gewünschte Reinheitsgrad in einem im Vergleich dazu kürzeren Zeitraum erreichen. Vorzugsweise ist dabei der zweite Schwellenwert größer als der erste Schwellenwert.

In einer bevorzugten Ausführungsform kann, wenn der Kontaminationsgrad eine vorbestimmten dritten Schwellenwert übersteigt, anstatt des Schritts b) und c) der Kunststoff aussortiert und aus dem Wiederaufbereitungsverfahren entfernt werden. Dieser dritte Schwellenwert wird so gewählt, dass Kunststoff, dessen Kontaminationsgrad so hoch ist, dass sich eine Dekontamination nicht mehr wirtschaftlich lohnt, aus dem Verfahren entfernt und nicht weiterverarbeitet wird. Dies trägt weiter zur Wirtschaftlichkeit des Verfahrens bei. Günstigerweise ist dabei der dritte Schwellenwert größer als der erste und zweite Schwellenwert.

Vorteilhafterweise können im Schritt b) die Dekontaminationsprozessparameter mit Hilfe eines numerischen Diffusionsmodells ermittelt werden, wobei der Kontaminationsgrad ein Parameter des Modells ist. Mit den Diffusionsgesetzen und den bekannten Diffusionskoeffizienten der Verunreinigungsstoffe bzw. -gruppen lässt sich anhand des gemessenen Kontaminationsgrads die optimierte Temperatur bzw. Dauer des Dekontaminationsverfahrens fortlaufend neu ermitteln.

Günstigerweise können in Schritt b) die Dekontaminationsprozessparameter auch durch Vergleich des Kontaminationsgrads mit einem vorbestimmten Datensatz ermittelt werden. Ein solcher Datensatz lässt sich entweder durch Modellrechnungen oder experimentell erstellt werden. Je nach den Konzentrationen bzw. dem Vorhandensein von Verunreinigungsstoffen lässt sich somit durch Abgleichen der gemessene Werte mit in einer Datenbank gespeicherten Werten die für die jeweilige Situation passenden Parameter ermitteln.

In einer besonders bevorzugten Ausführungsform kann zwischen dem Schritt a) und b) der Kunststoff in Abhängigkeit des ermittelnden Kontaminationsgrads einer von mindestens zwei Teilmengen zugeführt werden, und im Schritt b) für jede der mindestens zwei Teilmengen Dekontaminationsprozessparameter ermittelt werden und im Schritt c) für jede der Teilmengen die Dekontamination nach den ermittelten Dekontaminationsprozessparametern durchgeführt werden. Dies ermöglicht eine weitere Flexibilisierung des Verfahrens, da man beispielsweise Kunststoffe mit ähnlichem Kontaminationsgrad in verschiedenen Teilmengen sammelt und dann die Teilmengen unabhängig voneinander dekontaminiert. Man kann eventuell auch Pufferspeicher einrichten, in denen man die Teilmengen lagern kann bis genügend Material gesammelt wurde und erst dann mit der Dekontamination fortfahren. Damit lässt sich das Verfahren weiterhin besser wirtschaftlich ausnutzten.

Die Aufgabe der Erfindung wird auch mit einer Vorrichtung nach Anspruch 17 erfüllt.

Erfindungsgemäß umfasst die Vorrichtung zum Durchführen des Verfahrens eine Anlage zum Analysieren des Kontaminationsgrads des Kunststoffs, eine Anlage zum Ermitteln von Dekontaminationsprozessparametern in Abhängigkeit von dem festgestellten Kontaminationsgrad, und eine Anlage zum gesteuerten Dekontaminieren des Kunststoffs gemäß den ermittelten Dekontaminationsprozessparametern.

Mit dieser Vorrichtung kann die Dekontamination, dank der Erfassung des Kontaminationsgrads, automatisch der tatsächlichen Verunreinigung des Kunststoffs angepasst werden. Durch die gesteuerte Dekontamination wird somit übermäßiges Reinigen verhindert.

Günstigerweise kann die Anlage zum Analysieren einen Massenspektrometer umfassen. Massenspektrometer ermöglichen es, die verunreinigungsstoffe nach Typ und Menge zu bestimmen und sind daher in besonderer Art und Weise für die erfindungsgemäße Vorrichtung geeignet.

Vorteilhafterweise ist dabei der Massenspektrometer so konfiguriert, dass er den Kontaminationsgrad im Wesentlichen in Echtzeit ermittelt. Durch ein schnelles Analysieren des Kontaminationsgrads aller Flakes in verbindung mit einem schnellen Ermitteln von den Dekontaminationsprozessparametern lässt sich somit der ganze Ablauf beschleunigen.

Ausführungsbeispiele der Erfindung sind in den Zeichnungen dargestellt und werden nachstehend erläutert. Es zeigen:
- Fig. 1: ein Flussdiagramm eines ersten Ausführungsbeispiels des erfindungsgemäßen Verfahrens,
- Fig. 2: ein Flussdiagramm einer zweiten Ausführungsform des erfindungsgemäßen Verfahrens,
- Fig. 3: eine schematische Ansicht einer ersten Ausführungsform der erfindungsgemäßen Vorrichtung, und
- Fig. 4: ein Beispiel einer möglichen Anpassung der Dekontaminationsprozessparameter in Abhängigkeit einer erfassten Verunreinigungskonzentration, der zeit und der Temperatur.

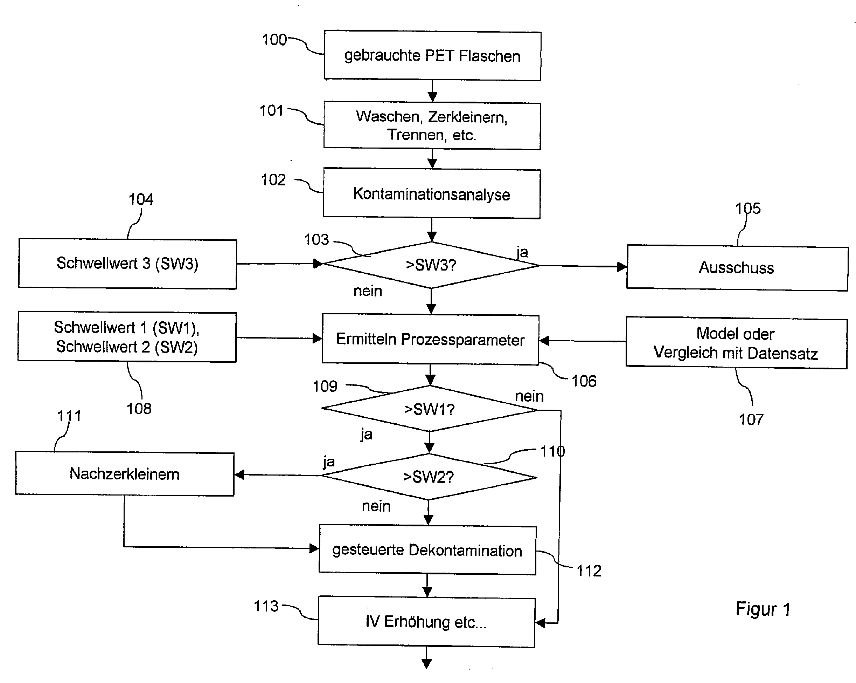

Fig. 1 zeigt ein Flussdiagramm einer ersten Ausführungsform des erfindungsgemäßen Verfahrens zum Wiederaufbereiten von gebrauchten Kunststoffbehältern, insbesondere PET-Flaschen. In Schritt 100 werden gebrauchte PET-Flaschen bereitgestellt. Diese werden im folgenden in mehreren Schritten 101 gewaschen und zerkleinert. Außerdem werden die verschiedenen Materialien, wie beispielsweise PET, Polyethylen der verschlusskappen, Papier- oder Plastiketiketten, Metallverschlüsse und Klebstoffe, getrennt. Die im folgenden beschriebenen Verfahrensschritte betreffen nur noch die durch das Zerkleinern entstandenen PET-Flakes.

In Schritt 102 wird der Kontaminationsgrad aller Kunststoffflakes, gemäß dem Verfahrensschritt a) des Anspruchs 1, analysiert. Dazu wird beispielsweise ein Massenspektrometer benutzt, der ein Kontaminationsprofil nach Verunreinigungsstoff und -menge erstellt. Aus dem erfassten Kontaminationsprofil wird dann der Kontaminationsgrad bestimmt. Der Kontaminationsgrad kann auf verschiedene Weisen bestimmt werden. So wird beispielsweise durch Aufsummierung der Konzentrationen der erfassten verunreinigungsstoffe das Kontaminationsniveau ermittelt. In einer zweiten Variante kann man eine gewichtete Summierung durchführen, indem man je nach verunreinigungsstärke eines Verunreinigungsstoffs diesem einen Gewichtungsfaktor zuordnet, den man dann mit der jeweiligen Konzentration multipliziert und erst dann die Gesamtaufsummierung durchführt. Somit lässt sich gewährleisten, dass geringe Konzentrationen an stark verunreinigten Stoffen verstärkt im Kontaminationsgrad eine Rolle spielen. Nach einer weiteren Variante werden mehrere verunreinigungsstoffe mit ähnlichen Eigenschaften, wie beispielsweise Kohlenwasserstoffe oder Aromen, zu Gruppen zusammengefasst und nach den eben beschriebenen Methoden für jede dieser Gruppe jeweils ein Kontaminationsgrad bestimmt.

Im Schritt 103 wird dann dieser in Schritt 102 analysierte Kontaminationsgrad mit einem vorbestimmten Schwellenwert 3 (SW 3), der im Schritt 104 zur Verfügung gestellt wird, verglichen. Dieser Schwellenwert 3 kann entweder fest vorgegeben sein oder aber vom Betreiber einer Wiederaufbreitungsanlage den Umständen-entsprechend angepasst werden. Liegt der ermittelte Kontaminationsgrad oberhalb dieses Schwellenwerts 3, so werden die entsprechenden Kunststoffflakes aussortiert und aus dem Verfahren entfernt, da sie zu stark verschmutzt sind. Für den Fall, dass mehrere Kontaminationsgrade bestimmt worden sind, gibt es die Möglichkeit, dass die Kunststoffflakes nur dann aussortiert werden, wenn alle Kontaminationsgrade oberhalb der jeweiligen Schwellenwerte 3 liegen oder, dass die Kunststoffflakes aussortiert werden, wenn mindestens ein Kontaminationsgrad oberhalb des zugehörigen Schwellenwerts 3 liegt. Dadurch wird es beispielsweise ermöglicht, dass selbst wenn PET-Flaschen nicht durch Kohlenwasserstoffe verunreinigt waren, sondern darin nur Spuren von Aromen gefunden worden sind, diese trotzdem aussortiert werden.

Liegt der Kontaminationsgrad unterhalb des Schwellenwerts 3, wird im Schritt 106 die dem im Schritt 102 festgestellten Kontaminationsgrad entsprechenden Dekontaminationsprozessparameter, gemäß dem Verfahrensschritt b) des Anspruchs 1, ermittelt. Zur Ermittlung dieser Parameter kann entweder ein numerisches Modell, basierend auf den Diffusionsgesetzen benutzt werden oder die Kontaminationsgrade werden mit einem vorgegebenen Datensatz verglichen 107. Benutzt man die numerische Methode, so kann man anhand der ermittelten Konzentrationen bei einer vorgegebenen Dekontaminationsprozesstemperatur die benötigte Dauer des Dekontaminationsschrittes berechnen. Umgekehrt kann man bei einer fest vorgegebenen Dekontaminationsdauer die Prozesstemperatur berechnen, die nötig wäre, um die Kunststoffflakes während dieser vorgegebenen Prozessdauer ausreichend zu reinigen. Ergibt sich durch Berechnung eine Temperatur, die oberhalb einer kritischen Übergangstemperatur von z.B. 220°C liegt, so wird entsprechend die Prozessdauer verlängert. Anstatt die Dekontaminationsprozessparameter jeweils neu zu berechnen, ist es in einer Variante auch möglich diese durch einen Vergleich der Kontaminationsgrade mit einem vorbestimmten Datensatz (wobei dieser auf den selben Gesetzen wie das numerische Modell beruht) bestimmt.

Bei der Ermittlung der Prozessparameter im Schritt 106 wird auch ein Schwellenwert 1 und ein Schwellenwert 2, die im Schritt 108 zur Verfügung gestellt werden, berücksichtigt. Der Schwellenwert 1 gibt an, für welchen Kontaminationsgrad im Folgenden überhaupt eine Dekontamination nötig ist. Liegt die verunreinigung unterhalb dieser Grenze, so kann der Kunststoff ohne Dekontaminationsschritt direkt weiterverarbeitet werden. Schwellenwert 2 gibt an, ab welchem Kontaminationsgrad es vorteilhaft ist, den Kunststoff nachzuverkleinern, um die Diffusionswege zu verkürzen um dadurch die Dekontamination zu beschleunigen. Diese Schwellenwerte können vorbestimmt sein bzw. vom Benutzer eingestellt werden, um das Verfahren so anzupassen, dass das wiederaufbereitete Material den Qualitätsanforderungen, die je nach Anwendung des wiederaufbereiteten Materials unterschiedlich sein können, entspricht.

Liegt demnach der Kontaminationsgrad unterhalb des Schwellenwertes 1 (Schritt 109), so wird der spezielle Dekontaminationsschritt im Verfahren übersprungen und das Wiederaufbereitungsverfahren führt gleich den IV (intrinsic viscosity) Erhöhungsschritt aus, der dazu dient, den PET-Flakes wieder die Eigenschaften zu geben, die benötigt werden um daraus wieder PET-Flaschen herstellen zu können (Schritt 113). Hierbei findet auf Grund der Erwärmung auch eine gewisse Dekontamination statt.

Liegt der Kontaminationsgrad oberhalb des Schwellenwerts 1, wird im nächsten Schritt 110 geprüft, ob der Kontaminationsgrad oberhalb des Schwellenwerts 2 liegt. Ist dies der Fall, so werden im Schritt 111 die Kunststoffflakes nachzerkleinert und erst dann dem Dekontaminationsschritt 112 zugeführt. Liegt der Kontaminationsgrad unterhalb des Schwellenwerts 2, so wird das Verfahren direkt mit dem Dekontaminationsschritt 112 weitergeführt.

Der Dekontaminationsschritt 112 wird mit den im Schritt 106 ermittelten Prozessparametern durchgeführt und stellt somit, gemäß dem Verfahrensschritt c) des Anspruchs 1, einen gesteuerten Verfahrensschritt dar. Die Einstellung der Stellglieder für die einzelnen Prozessparameter wie Temperatur, Dekontaminationsdauer, etc. erfolgt dabei üblicherweise automatisch. Danach werden die Kunststoffflakes dem nächsten Verfahrensschritt 113, der IV-Erhöhung, wie oben beschrieben, zugeführt.

Ausgehend von diesem ersten Ausführungsbeispiel lassen sich auch weitere Varianten realisieren. So ist es beispielsweise nicht unbedingt nötig die Flaschen vor der Kontaminationsanalyse schon zu zerkleinern, sondern man könnte noch unzerstörte PET-Flasche auf ihren Kontaminationsgrad hin prüfen. In einer weiteren Variante könnte man vor dem Kontaminationsanalyseschritt 102 eine Trennung der PET-Flakes vornehmen, wobei man PET-Flakes, die von dickeren Flaschenkopfteilen stammen, von den PET-Flakes der restlichen Flasche trennt. Dies ist deshalb interessant da dadurch, dass die PET-Flakes von Flaschenkopf dicker sind als jene vom Rest der Flasche, es schwieriger ist diese zu reinigen, da die verunreinigungen tiefer im PET-Material sitzen. Im beschriebenen Ausführungsbeispiel sind die Prozesstemperatur und die Prozessdauer als Dekontaminationsprozessparameter genannt worden. Dies sind jedoch nur zwei Beispiele für Prozessparameter, da man eventuell auch die zur Dekontamination benutzten Reinigungsmittel anpassen könnte.

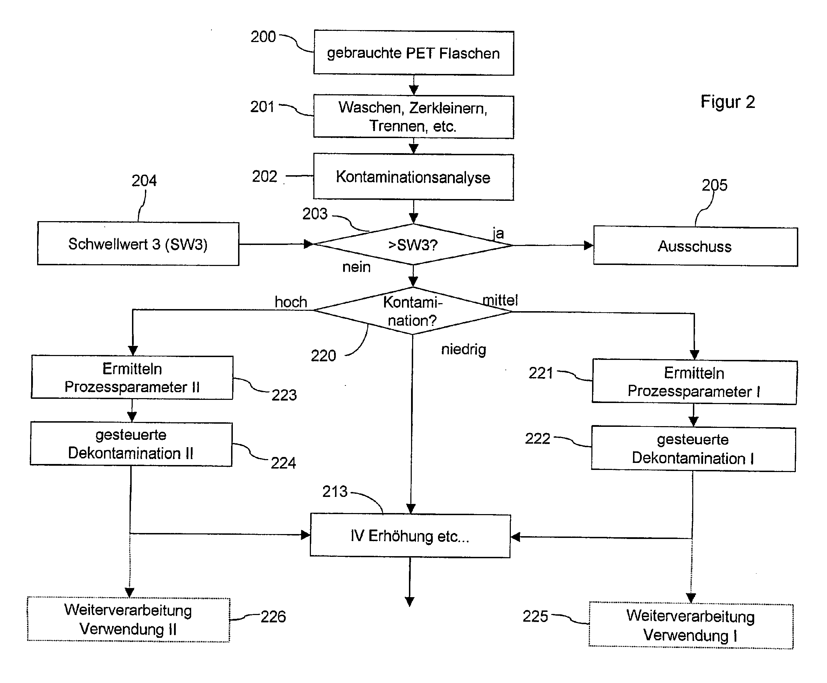

Fig. 2 zeigt eine zweite Ausführungsform des Verfahrens zum Wiederaufbereiten von gebrauchten Kunststoffbehältern. Hierbei entsprechen die verfahrensschritte 200 bis 205 und 213 den Verfahrensschritten 100 bis 105 und 113 des in der Fig. 1 gezeigten ersten Ausführungsbeispiels. Die Verfahrensschritte 200 bis 205 und 213 haben die gleichen Merkmale wie die entsprechenden verfahrensschritte im ersten Ausführungsbeispiel und werden daher im Folgenden nicht mehr im Detail beschrieben.

Der wesentliche Unterschied bezüglich der ersten Ausführungsform liegt darin, dass nach dem Analysieren der Kontamination (Verfahrensschritt a) mehrere Prozesse parallel durchgeführt werden können. Wurde im Schritt 203 ermittelt, dass der Kontaminationsgrad unterhalb des maximalen erlaubten und durch den Schwellenwert 3 festgelegten Kontaminationsgrad liegt, wird in Schritt 220 entschieden, ob der Kontaminationsgrad niedrig, mittelgroß oder hoch ist. Hierbei bedeutet niedrig, mittelgroß oder hoch jeweils einen Kontaminationsbereich, wobei die Grenzwerte zwischen den Bereichen vorbestimmt bzw. vom Benutzer frei wählbar sind.

Wurde ermittelt, dass der Kontaminationsgrad niedrig ist, so wird wie im ersten Ausführungsbeispiel keine Dekontamination durchgeführt und das Verfahren läuft mit dem nächsten Verfahrensschritt 213, der IV-Erhöhung, weiter.

Wurde ein Kontaminationsgrad festgestellt, der im mittleren Kontaminationsbereich liegt, so werden hierfür in Prozessschritt 221 die passenden Prozessparameter I ermittelt (Verfahrensschritt b) und anschließend die Dekontamination gemäß den ermittelten Prozessparametern I gesteuert durchgeführt (Schritt 222, Verfahrensschritt c). Die Prozessparameter werden dabei genauso bestimmt, wie dies schon in Verbindung mit dem ersten Ausführungsbeispiel beschrieben worden ist. Wie auch schon im ersten Ausführungsbeispiel werden hierbei die Stellglieder zum Einstellen der Dekontaminationsprozessparameter automatisch gemäß den ermittelten Prozessparametern eingestellt. Anschließend wird das Verfahren mit dem Schritt 213, der IV-Erhöhung, weitergeführt.

Wurde im Schritt 220 festgestellt, dass der Kontaminationsgrad im Bereich der hohen Kontamination liegt, so wird im Prozessschritt 223 ein zweiter Satz Prozessparameter II ermittelt (Verfahrensschritt b) und anschließend die Dekontamination gemäß diesem zweiten Prozessparametern II gesteuert durchgeführt (Schritt 224, Verfahrensschritt c). Wie auch schon im ersten Ausführungsbeispiel werden hierbei die Stellglieder zum Einstellen der Dekontaminationsprozessparameter automatisch gemäß den ermittelten Prozessparametern eingestellt. Anschließend wird auch hier das Verfahren mit dem Schritt 213 weitergeführt.

In einer Variante werden die drei Teilmengen nach ihrer jeweiligen Dekontamination unterschiedlich weiter verarbeitet. So könnte man beispielsweise die Grenzwerte zwischen den verschiedenen Kontaminationsniveaus niedrig, mittel, hoch so einstellen, dass man für die niedrige und die mittelgroße Kontaminationsteilmengen das Verfahren so durchführt, dass man die PET-Flakes anschließend wieder zur Getränkeflaschenherstellung benutzen kann, während die Teilmenge mit hohem Kontaminationsgrad, für die sich eine Dekontamination bis auf ein für die Lebensmittelindustrie geeignetes Niveau, wirtschaftlich nicht lohnt, für einen anderen Zweck mit geringeren Anforderungen wiederaufbereitet wird (226).

In einer weiteren Variante ist es denkbar, dass man die Schritte 223, 224 und 221, 222 nicht parallel durchführt, sondern Pufferspeicher einrichtet, Material mit dem gleichen Kontaminationsgrad zwischenspeichert und sobald man genügend Material in den Pufferspeichern hat, die jeweils geeignete Dekontamination hierfür durchführt. Man kann beispielsweise erst eine oder mehrere Chargen aussortieren, dann mit die Teilmenge dekontaminieren, für die die Dekontamination am schnellsten erreicht wird und dann mit der stärker verschmutzten Teilmenge fortfährt bzw. wartet bis diese Teilmenge groß genug ist.

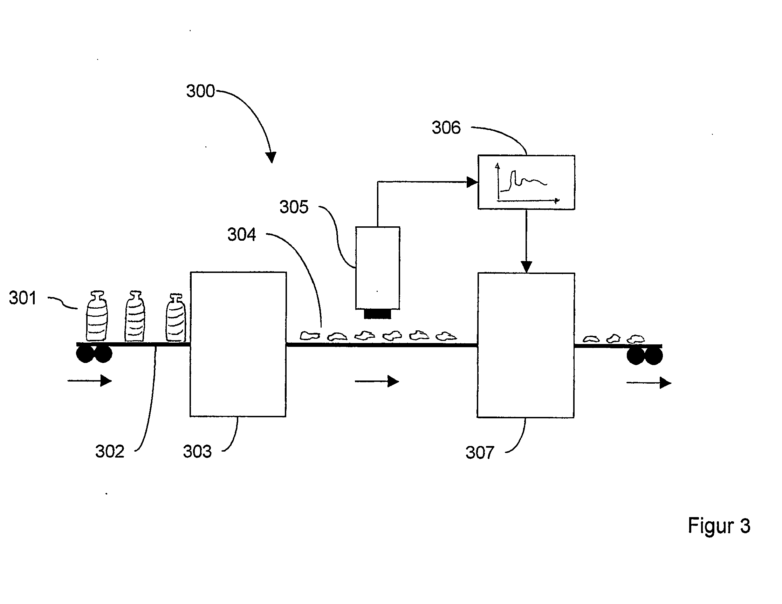

Fig. 3 zeigt eine Ausführungsform einer Vorrichtung zum Durchführen des erfindungsgemäßen Verfahrens zum Wiederaufbereiten von gebrauchten Kunststoffbehältern, insbesondere PET-Flaschen. Gebrauchte PET-Flaschen 301 werden auf ein Förderband 302 gegeben. In einem ersten Abschnitt 303 werden die Flaschen 301 gewaschen und zerkleinert. Hier nicht gezeigt ist der Abschnitt, in dem die verschiedenen Materialien voneinander getrennt werden. Aus dem Abschnitt 303 treten dann die vorgewaschenen PET-Flakes 304 aus und werden von einer Kontaminationsanalysevorrichtung 305, wie beispielsweise einem Massenspektrometer, im kontinuierlichen Strom auf ihren Kontaminationsgrad hin untersucht. Die Analysevorrichtung 305 gibt die erfassten Daten bezüglich des Kontaminationsgrades an eine Steuereinheit 306 weiter, die die dem Kontaminationsgrad entsprechenden Prozessparameter ermittelt und automatisch an die entsprechenden Stellglieder, wie ein Temperaturregler, die Prozessdauereinstellung, etc, im Dekontaminationsabschnitt 307 der Vorrichtung 300 weitergibt. Die Kunststoffflakes 304 treten in diesen Dekontaminationsabschnitt 307 ein und werden dort ihrem Kontaminationsgrad entsprechend gereinigt was im kontinuierlichen Strom oder chargenweise erfolgen kann. Die PET-Flakes 304 treten dann wieder aus dem Dekontaminationsabschnitt 307 aus und können anschließend weiter behandelt werden.

Es ist durchaus denkbar die Qualität der Dekontamination nach Austritt aus dem Dekontaminationsabschnitt zu überprüfen und falls es sich ergibt, dass die Dekontamination nicht ausreichend war, daraufhin die Prozessparameter nochmals zu überprüfen und gegebenenfalls anzupassen, also einen geschlossenen Regelkreis bezüglich der Dekontaminationsparameter auszubilden.

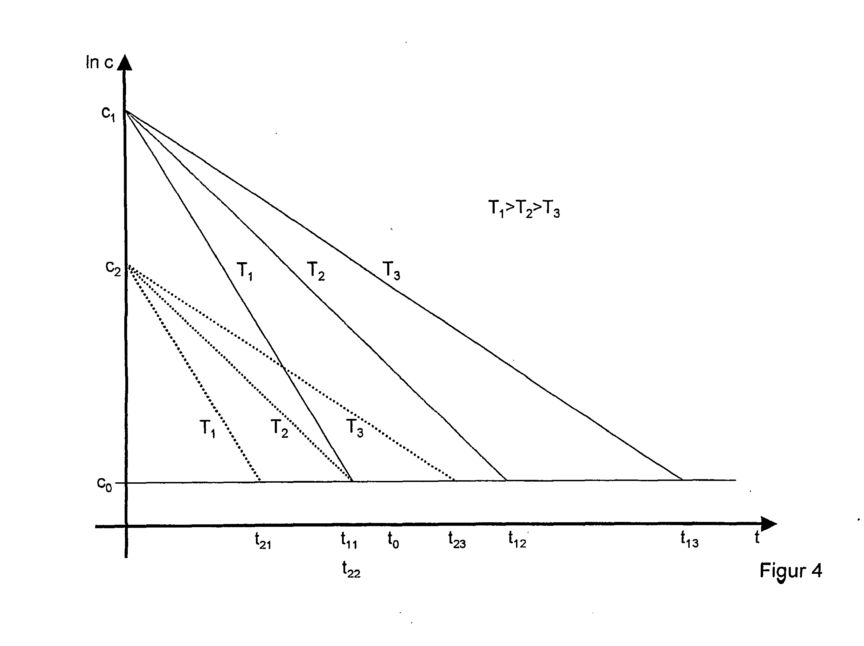

Fig. 4 zeigt ein Beispiel wie man anhand der erfassten Konzentration eines verunreinigungsstoffes die Prozessparameter Temperatur und Zeit steuern kann. Es sind auf der Y-Achse der Logarithmus der Konzentration der Verunreinigung und auf der X-Achse die Zeit aufgetragen. Gemäß dem Diffusionsgesetz nimmt der Logarithmus der Konzentration bei konstanter Temperatur linear mit der Zeit ab. Misst man beispielsweise eine Konzentration C1 und will diese auf ein Niveau C0 zurückführen, so benötigt man bei der Temperatur T1 dazu eine Zeit von t11. Bei der niedrigeren Temperatur T2 benötigt man dazu schon einen Zeitraum von t12, und bei einer noch niedrigeren Temperatur T3 benötigt man eine Dauer t13. Soll die Dekontamination nun in einem Zeitraum von maximal t0 durchgeführt werden, so kann man bei einer Verunreinigung mit einer Konzentration von C1 dies nur bei einer Prozesstemperatur T1 erreichen. Liegt allerdings das erfasste Kontaminationsniveau bei C2, so erkennt man, dass man auch innerhalb der Dauer t0 bei einer Prozesstemperatur T2 liegt. Behält man jedoch die höhere Temperatur T1 bei, so erreicht man das gewünschte Niveau C0 schon nach einer Zeit von t21.

Anhand der Fig. 4 erkennt man somit, dass durch Analysieren des Kontaminationsgrads und Ermitteln geeigneter Dekontaminationsprozessparameter die Dekontaminierung optimiert werden kann. Dabei wird üblicherweise für die Prozesstemperatur ein oberer Grenzwert von ca. 230°C festgelegt.

## Patentansprüche

1. Verfahren zum Wiederaufbereiten von gebrauchten Kunststoffbehältern, insbesondere PET-Flaschen, mit den Schritten:
a) Analysieren (102, 202) des Kontaminationsgrads des Kunststoffs,
b) Ermitteln (106, 221, 223) von Dekontaminationsprozessparametern in Abhängigkeit von dem im Schritt a) festgestellten Kontaminationsgrad, und
c) gesteuertes Dekontaminieren (112) des Kunststoffs gemäß den ermittelten Dekontaminationsprozessparametern.

2. Verfahren nach Anspruch 1, **dadurch gekennzeichnet, dass** im Schritt a) im Kunststoff vorhandene Verunreinigungsstoffe und deren jeweilige Konzentration festgestellt werden.

3. Verfahren nach Anspruch 2, **dadurch gekennzeichnet, dass** die erfassten verunreinigungsstoffe zu Verunreinigungsgruppen zusammengefasst werden.

4. Verfahren nach einem der Ansprüche 1 bis 3 **dadurch gekennzeichnet, dass** im Schritt b) eine dem Kontaminationsgrad angepasste Prozesstemperatur, als ein Dekontaminationsprozessparameter, ermittelt wird.

5. Verfahren nach einem der Ansprüche 1 bis 4 **dadurch gekennzeichnet, dass** im Schritt b) eine dem Kontaminationsgrad angepasste Prozessdauer, als ein Dekontaminationsprozessparameter, ermittelt wird.

6. Verfahren nach einem der Ansprüche 2 bis 5, **dadurch gekennzeichnet, dass** im Schritt b) der Kontaminationsgrad des Kunststoffs durch Summierung der Konzentrationen der erfassten Verunreinigungsstoffe oder Verunreinigungsgruppen ermittelt wird.

7. Verfahren nach Anspruch 6, **dadurch gekennzeichnet, dass** den einzelnen Verunreinigungsstoffen oder Verunreinigungsgruppen ein Gewichtungsfaktor in Abhängigkeit von einer dem Verunreinigungsstoff oder der Verunreinigungsgruppe entsprechenden verunreinigungsstärke zugeordnet wird, und sich der Kontaminationsgrad aus der gewichteten Summierung der Konzentrationen der erfassten verunreinigungsstoffe oder Verunreinigungsgruppen ergibt.

8. Verfahren nach einem der Ansprüche 2 bis 5, **dadurch gekennzeichnet, dass** im Schritt b) die Dekontaminationsprozessparameter in Abhängigkeit von den Konzentrationen einer vorbestimmten Anzahl an Verunreinigungsstoffen oder Verunreinigungsgruppen ermittelt werden.

9. Verfahren nach einem der Ansprüche 2 bis 5, **dadurch gekennzeichnet, dass** im Schritt b) für mindestens zwei, insbesondere alle, erfassten Verunreinigungsstoffe oder Verunreinigungsgruppen jeweils die Dekontaminationsprozessparameter unabhängig voneinander ermittelt werden und im Schritt c) die Dekontaminationsprozessparameter angewandt werden, für die das Dekontaminationsanforderungsprofil am höchsten ist.

10. Verfahren nach einem der Ansprüche 1 bis 9, **dadurch gekennzeichnet, dass** im Schritt b) die Dekontaminationsprozessparameter abhängig von regelbaren Schwellenwerten (SW1, SW2) ermittelt werden.

11. Verfahren nach einem der Ansprüche 1 bis 10, **dadurch gekennzeichnet, dass** der Schritts c) nur dann durchgeführt wird, wenn der Kontaminationsgrad einen vorbestimmten ersten Schwellenwert (SW1) übersteigt.

12. Verfahren nach einem der Ansprüche 1 bis 11, **dadurch gekennzeichnet, dass** zwischen den Schritten b) und c) der Kunststoff nachzerkleinert (111) wird, wenn der Kontaminationsgrad einen vorbestimmten zweiten Schwellwert (SW2) übersteigt.

13. verfahren nach einem der Ansprüche 1 bis 12, **dadurch gekennzeichnet, dass** anstatt des Schritts b) und c) der Kunststoff aussortiert und entfernt wird (105), wenn der Kontaminationsgrad einen vorbestimmten dritten Schwellwert (SW3) übersteigt.

14. Verfahren nach einem der Ansprüche 1 bis 13, **dadurch gekennzeichnet, dass** im Schritt b) die Dekontaminationsprozessparameter mit Hilfe eines numerischen Models ermitteltet werden (107) und, dass der Kontaminationsgrad ein Parameter des Models ist.

15. Verfahren nach einem der Ansprüche 1 bis 13, **dadurch gekennzeichnet, dass** im Schritt b) die Dekontaminationsprozessparameter durch Vergleich des Kontaminationsgrads mit einem vorbestimmten Datensatz ermittelt werden (107).

16. Verfahren nach einem der Ansprüche 1 bis 15, **dadurch gekennzeichnet, dass** zwischen Schritt a) und b) der Kunststoff in Abhängigkeit des Kontaminationsgrads einer von mindestens zwei Teilmengen zugeführt wird und im Schritt b) für jede der mindestens zwei Teilmengen Dekontaminationsprozessparameter ermittelt werden (221, 223) und im Schritt c) für jede der Teilmengen die Dekontamination nach den ermittelten Dekontaminationsprozessparametern durchgeführt wird (222, 224).

17. Vorrichtung zum Durchführen des Verfahrens nach einem der Ansprüche 1 bis 16,die umfasst:
- eine Anlage (305) zum Analysieren des Kontaminationsgrads des Kunststoffs
- eine Anlage (306) zum Ermitteln von Dekontaminationsprozessparametern in Abhängigkeit von dem festgestellten Kontaminationsgrad, und
- eine Anlage (307) zum gesteuerten Dekontaminieren des Kunststoffs gemäß den ermittelten Dekontaminationsprozessparametern.

18. Vorrichtung nach Anspruch 17, **dadurch gekennzeichnet, dass** die Anlage (305) zum Analysieren einen Massenspektrometer umfasst.

19. Vorrichtung nach Anspruch 18, **dadurch gekennzeichnet, dass** der Massenspektrometer so konfiguriert ist, dass der Kontaminationsgrad im Wesentlichen in Echtzeit ermittelt wird.

## Claims

1. Method for recycling used plastics containers, in particular PET bottles, comprising the steps:
a) analysing (102, 202) the degree of contamination of the plastics material,
b) determining (106, 221, 223) decontamination process parameters depending on the degree of contamination established in step a), and
c) controlled decontamination (112) of the plastics material depending on the determined decontamination process parameters.

2. Method according to claim 1, **characterised in that** in step a), impurity substances present in the plastics material and their respective concentrations are determined.

3. Method according to claim 2, **characterised in that** the recorded impurity substances are grouped together into impurity groups.

4. Method according to one of the claims 1 to 3, **characterised in that** in step b), a process temperature matched to the degree of contamination is determined as a decontamination process parameter.

5. Method according to one of the claims 1 to 4, **characterised in that** in step b), a process duration matched to the degree of contamination is determined as a decontamination process parameter.

6. Method according to one of the claims 2 to 5, **characterised in that** in step b), the degree of contamination of the plastics material is determined by summing the concentrations of the detected impurity substances or impurity groups.

7. Method according to claim 6, **characterised in that** a weighting factor is assigned to the individual impurity substances or impurity groups, depending on a level of impurity corresponding to the impurity substance or impurity group, and the degree of contamination is found by weighted summing of the concentrations of the detected impurity substances or impurity groups.

8. Method according to one of the claims 2 to 5, **characterised in that** in step b), the decontamination process parameters are determined depending on the concentrations of a predetermined number of impurity substances or impurity groups.

9. Method according to one of the claims 2 to 5, **characterised in that** in step b), for at least two, and in particular all, of the detected impurity substances or impurity groups, the decontamination process parameters are determined independently of one another and in step c), the decontamination process parameters for which the decontamination requirement profile is highest are applied.

10. Method according to one of the claims 1 to 9, **characterised in that** in step b), the decontamination process parameters are determined depending on controllable threshold values (SW1, SW2).

11. Method according to one of the claims 1 to 10, **characterised in that** step c) is only carried out if the degree of contamination exceeds a predetermined first threshold value (SW1).

12. Method according to one of the claims 1 to 11, **characterised in that** between steps b) and c), the plastics material is reshredded (111) if the degree of contamination exceeds a predetermined second threshold value (SW2).

13. Method according to one of the claims 1 to 12, **characterised in that**, in place of steps b) and c), the plastics material is sorted out and removed (105) if the degree of contamination exceeds a predetermined third threshold value (SW3).

14. Method according to one of the claims 1 to 13, **characterised in that** in step b), the decontamination process parameters are determined (107) with the aid of a numerical model and that the degree of contamination is a parameter of the model.

15. Method according to one of the claims 1 to 13, **characterised in that** in step b), the decontamination process parameters are determined (107) by comparison of the degree of contamination with a predetermined database.

16. Method according to one of the claims 1 to 15, **characterised in that** between steps a) and b), the plastics material is fed to one of at least two partial quantities and in step b), for each of the at least two partial quantities, decontamination process parameters are determined (221, 223) and in step c) for each of the partial quantities, the decontamination is carried out (222, 224) according to the determined decontamination process parameters.

17. Device for carrying out the method according to one of the claims 1 to 16, comprising:
- a system (305) for analysing the degree of contamination of the plastics material
- a system (306) for determining decontamination process parameters depending on the determined degree of contamination, and
- a system (307) for controlled decontamination of the plastics material according to the determined decontamination process parameters.

18. Device according to claim 17, **characterised in that** the system (305) for analysing comprises a mass spectrometer.

19. Device according to claim 18, **characterised in that** the mass spectrometer is configured so that the degree of contamination is determined essentially in real time.

## Revendications

1. Procédé de retraitement de récipients usagés en matière plastique, notamment de bouteilles en PET, comprenant les étapes suivantes :
a) Analyse (102, 202) du degré de contamination de la matière plastique,
b) Détermination (106, 221, 223) des paramètres du procédé de décontamination en fonction du degré de contamination constaté dans l'étape a), et
c) Décontamination commandée (112) de la matière plastique en fonction des paramètres déterminés du procédé de décontamination.

2. Procédé selon la revendication 1,
**caractérisé en ce que** dans l'étape a), on constate les impuretés existantes dans la matière plastique et leur concentration respective.

3. Procédé selon la revendication 2,
**caractérisé en ce qu'** on regroupe les impuretés saisies en groupes d'impuretés.

4. Procédé selon les revendications 1 à 3,
**caractérisé en ce que** dans l'étape b), on détermine une température de procédé adaptée au degré de contamination, comme paramètre du procédé de décontamination.

5. Procédé selon les revendications 1 à 4,
**caractérisé en ce que** dans l'étape b), on détermine une durée de procédé adaptée au degré de contamination, comme paramètre de procédé de décontamination.

6. Procédé selon les revendications 2 à 5,
**caractérisé en ce que** dans l'étape b), on détermine le degré de contamination de la matière plastique par addition des concentrations des impuretés saisies ou des groupes d'impuretés.

7. Procédé selon la revendication 6,
**caractérisé en ce qu'** aux différentes impuretés ou groupes d'impuretés, on associe un facteur de pondération en fonction d'une intensité d'impuretés correspondant à l'impureté ou groupe d'impuretés, et le degré de contamination résulte de la sommation pondérée des concentrations des impuretés saisies ou des groupes d'impuretés.

8. Procédé selon les revendications 2 à 5,
**caractérisé en ce que** dans l'étape b), on détermine les paramètres du procédé de décontamination en fonction des concentrations d'un nombre prédéfini d'impuretés ou de groupes d'impuretés.

9. Procédé selon les revendications 2 à 5,
**caractérisé en ce que** dans l'étape b), pour au moins deux impuretés et notamment toutes les impuretés saisies ou tous les groupes d'impuretés, on détermine respectivement les paramètres de décontamination indépendants les uns des autres, et dans l'étape c), on applique les paramètres du procédé de décontamination qui sont les plus élevés pour le profil de demande de décontamination.

10. Procédé selon les revendications 1 à 9,
**caractérisé en ce que** dans l'étape b), on détermine les paramètres du procédé de décontamination en fonction de valeurs de seuil réglables (SW1, SW2).

11. Procédé selon les revendications 1 à 10,
**caractérisé en ce que** l'étape c) n'est exécutée que si le degré de contamination dépasse une première valeur de seuil (SW1) prédéfinie.

12. Procédé selon les revendications 1 à 11,
**caractérisé en ce qu'** entre les étapes b) et c), on réduit en morceaux (111) la matière plastique si le degré de contamination dépasse une seconde valeur de seuil (SW2) prédéfinie.

13. Procédé selon les revendications 1 à 12,
**caractérisé en ce qu'** à la place de l'étape b) et c), on classe la matière plastique et on l'élimine (105) si le degré de contamination dépasse une troisième valeur de seuil (SW3) prédéfinie.

14. Procédé selon les revendications 1 à 13,
**caractérisé en ce que** dans l'étape b), on détermine les paramètres de décontamination à l'aide d'un modèle numérique (107), et le degré de contamination est un paramètre du modèle.

15. Procédé selon les revendications 1 à 13,
**caractérisé en ce que** dans l'étape b), on détermine (107) les paramètres de décontamination par comparaison du degré de contamination avec un jeu de données prédéfini.

16. Procédé selon les revendications 1 à 15,
**caractérisé en ce qu'** entre l'étape a) et b), on fournit la matière plastique en fonction du degré de contamination à au moins deux ensembles partiels, et dans l'étape b), pour chacune d'au moins deux quantités partielles, on détermine des paramètres de procédé de décontamination (221, 223) et dans l'étape c), pour chacune des quantités partielles, on effectue la décontamination selon les paramètres de procédé de décontamination déterminés (222, 224).

17. Dispositif pour la mise en oeuvre du procédé selon les revendications 1 à 16, comprenant :
- une installation (305) pour analyser le degré de contamination de la matière plastique,
- une installation (306) pour déterminer les paramètres du procédé de décontamination en fonction du degré de contamination constaté, et
- une installation (307) pour décontaminer de manière commandée la matière plastique selon les paramètres déterminés du procédé de décontamination.

18. Dispositif selon la revendication 17,
**caractérisé en ce que** l'installation (305) d'analyse comprend un spectromètre de masse.

19. Dispositif selon la revendication 18,
**caractérisé en ce que** le spectromètre de masse est configuré pour déterminer le degré de contamination principalement en temps réel.
